# FASCICULE DE BREVET EUROPEEN

(11) **EP 1 238 794 B1**
(45) Date de publication et mention de la délivrance du brevet: **27.09.2006**
(21) Numéro de dépôt: 02356046.9
(22) Date de dépôt: 07.03.2002
(51) Int. Cl.: B32B 5/26, D04H 13/00, B29C 70/08, E04B 1/74

(54) **Plaque isolante constitutée de couches non-tissés et d' armatures du type grille**
Isolierstruktur bestehend aus Schichten von Vliesstoff und Verstärkungsnetzen
Insulating panel made of layers of non-woven and reinforcement grids

(30) Priorité: 07.03.2001 FR 0103083
(43) Date de publication de la demande: 11.09.2002
(73) Titulaire: CHOMARAT COMPOSITES, 75002 Paris (FR)
(72) Inventeur: Baudonnel, Jacques, 07160 Le Cheylard (FR)
(74) Mandataire: Thibault, Jean-Marc

(56) Documents cités:
- DE-A- 19 900 424
- DE-U- 9 411 193
- US-A- 4 302 495
- US-A- 4 840 832
- US-A- 4 946 738

## Description

La présente invention concerne le domaine des produits utilisables pour constituer des structures thermoformées ou non et elle vise, plus particulièrement, celles de ces structures qui doivent présenter un caractère d'isolation thermique et/ou phonique, associé à un caractère initial de renfort.

Dans le domaine général ci-dessus, il est connu d'avoir recours à des éléments structurels pour la constitution de parois au sens général du terme, c'est-à-dire d'éléments à caractère plan ou en forme qui ont pour fonction, par exemple, de délimiter des aires à fonctionnalité propre, des volumes ou, encore, de constituer des panneaux mobiles, tels que ceux équipant les coffres, armoires, en tant que portes, abattants, tablettes, etc...

Depuis déjà un certain temps, la technique antérieure s'est souciée de pouvoir réaliser de tels éléments de structures de manière qu'ils puissent être obtenus à un prix de revient intéressant, tout en présentant des caractéristiques mécaniques qui sont en rapport avec l'application visée.

C'est ainsi qu'il a été fréquemment proposé de réaliser de tels éléments de structures à partir de complexes en feuilles de matière plastique ou de carton, imprégnées ou non, associées ou non à des épaisseurs de matières plastiques, généralement à l'état de mousse.

Si dans certaines applications de telles propositions peuvent être considérées comme acceptables, en revanche, dans de nombreuses autres, une telle technologie ne résout pas le double problème de la légèreté alliée à une résistance mécanique certaine.

Par ailleurs, le souci légitime de pouvoir réduire le prix de revient de tels panneaux ou parois, notamment pour certaines applications, n'est généralement pas non plus atteint avec la mise en oeuvre de telles techniques.

Le besoin se fait donc sentir de pouvoir disposer d'éléments de structure qui soient légers, résistants, susceptibles d'être produits à un prix de revient intéressant et capables, de surcroît, d'assumer des fonctions d'isolation thermique et/ou acoustique, comme cela est particulièrement recherché dans des applications spécifiques, telles que le domaine automobile, voire celui de la réalisation des berceaux, cages, chambres ou autres lieux fermés destinés à abriter des sources de production d'énergie bruyantes, telles que celles faisant appel à des moteurs thermiques du type à explosion, qu'ils soient à allumage commandé ou non.

L'objet de l'invention est aussi de répondre à ce besoin en proposant un nouvel élément de structure qui présente, supplémentairement, l'avantage d'être thermoformable et d'être stable hygrométriquement, de façon que, le cas échéant, il puisse être utilisé en tant qu'élément de structure proprement dit, mais aussi en tant que structure d'espacement ou d'allégement entre deux plaques, panneaux ou parements de revêtement avec lesquels il peut constituer une structure définitive stable, légère et résistante.

Un autre objet de l'invention est aussi de fournir un élément de structure qui soit thermostable dans la limite des matrices thermoplastiques.

Pour atteindre les objectifs ci-dessus, l'objet de l'invention vise un complexe en forme générale de plaque qui est caractérisé en ce qu'il se compose :
- d'une âme à caractère cohérent constitué d'un amalgame de fibres de renfort et de fibres thermoplastiques liées au moins pour partie,
- et d'au moins une armature de renforcement du type grille appliquée sur et intimement liée à l'une des grandes faces de l'âme.

Diverses autres caractéristiques ressortent de la description faite ci-dessous en référence aux dessins annexés qui montrent, à titre d'exemples non limitatifs, des formes de réalisation de l'objet de l'invention.
La **fig. 1** est une perspective partielle d'un complexe conforme à l'invention.
La **fig. 2** est une coupe partielle prise, à plus grande échelle, sensiblement selon le plan **II-II** de la **fig. 1.**
La **fig. 3** est une coupe, analogue à la **fig. 2,** mais illustrant une variante de réalisation.
Les **fig. 4** et **5** sont des coupes partielles, analogues aux **fig. 2** et **3,** mais illustrant deux autres variantes de réalisation.

La **fig. 1** montre que le complexe en forme de plaque, conforme à l'invention, se caractérise par une constitution élémentaire simple faisant intervenir une âme **1,** à caractère cohérent, qui est constituée d'un amalgame **2** de fibres de renfort et de fibres de matière thermoplastique qui sont liées entre elles, pour partie au moins. Par fibres de renfort, on entend les matières suivantes : verre, aramide, carbone. Par fibres de matière thermoplastique, il convient de retenir un choix de fibres homogènes en tant que matière première ou, encore, un choix hétérogène dans la mesure où une compatibilité de stabilité dans le temps peut résulter de leur contact intime et dans la mesure aussi où, par effet de fusion ou ramollissement, il est possible de les lier entre elles, ainsi qu'avec les fibres de renfort. Parmi les matières possibles, il convient de citer le polyéthylène, le polypropylène, le polyester, le polyamide, éventuellement en mélange.

Les fibres de renfort et les fibres thermoplastiques présentent un caractère non continu et possèdent, de préférence, une longueur élémentaire inférieure à 10 cm.

Ces fibres sont avantageusement produites à partir de matières de récupération de manière à en abaisser le coût.

L'amalgame **2** est constitué à partir de fibres thermoplastiques dans une proportion en poids comprise entre 15 à 60 % par rapport au poids total fibres de renfort-fibres thermoplastiques.

Il est avantageux de constituer l'amalgame **2** à partir de fibres de verre dont le diamètre peut être compris entre 11 µm et 24 µm, alors que les fibres en matière thermoplastique sont produites pour répondre à un titre compris entre 1,7 et 110 dtex.

L'amalgame **2** est produit de manière que les fibres de renfort et de matière thermoplastique soient soumises à une montée en température jusqu'à un seuil qui est de nature à provoquer le ramollissement ou la fusion des fibres thermoplastiques, après quoi l'amalgame subit, à chaud, une contrainte de compaction ou de compression, de manière à établir une liaison entre les points d'écrasement et de contact entre les fibres thermoplastiques et les fibres de renfort compactées ou comprimées relativement.

De cette manière, l'amalgame **2** présente une cohérence de comportement structurel analogue à une masse unitaire, homogène et peut être manipulé, stocké, transformé aisément.

Bien que le mode de production de l'amalgame **2** ne fasse pas partie à proprement parler de l'objet de l'invention, il peut être indiqué qu'un tel amalgame peut être produit en forme générale de plaque de façon continue ou de manière intermittente, par exemple dans un moule lui conférant une taille standard appropriée.

Le complexe en forme générale de plaque conforme à l'invention se caractérise, par ailleurs, par l'existence d'au moins une armature de renforcement désignée dans son ensemble par la référence **3** et qui est appliquée sur l'une des grandes faces telle que la face **2a** de l'âme **1,** en étant intimement liée à cette face de manière à constituer un ensemble unitaire exempt de risques de délitement dans le plan de clivage artificiel entre la face **2a** et l'armature **3.**

Conformément à l'invention, l'armature **3** est formée par une structure de type grille qui est constituée par une première nappe **4** de fils de renfort **5** tendus qui s'étendent parallèlement entre eux avec un intervalle constant. Par analogie et convention, les fils **5** peuvent être qualifiés de fils de chaîne. L'armature **3** comprend également une seconde nappe **6** de fils de renfort **7** qui s'étendent parallèlement entre eux avec un pas d'écartement ou un intervalle constant, égal ou non à celui des fils **5.** Les fils **7** peuvent également par convention être qualifiés de fils de trame et s'étendent selon l'exemple de la **fig. 1** selon une direction générale, orthogonale ou transversale à la direction des fils **5.**

Au sens de l'invention, il doit aussi être considéré qu'une orientation relative non orthogonale peut exister entre les nappes de fils **4** et **6.**

Selon une autre disposition avantageuse, la nappe **6** est constituée par simple dépôt des fils **7** sur les fils **5** de sorte qu'ils se croisent sans entrelacement.

Au sens de l'invention, il est indifférent que l'armature de renforcement soit appliquée et liée à la face **2a** en plaçant la nappe **4** ou éventuellement la nappe **6** en relation avec cette face.

Les fils de renfort, constituant les nappes **4** et **6,** sont liés entre eux par tous moyens appropriés, notamment par l'existence de fils de liage qui peuvent être associés aux fils de renfort ou décalés de ces derniers.

Les fils de renfort **5** et **7** peuvent être mono-brins ou multi-filaments en forme de mèches et, dans un tel cas, ils peuvent être du genre comêlés incorporant un ou des fils de liage réalisés en une matière thermoplastique choisie parmi les suivantes : polyéthylène, polypropylène, polyéthylènetéréphtalate.

Les fils de renfort **5** et **7** sont réalisés en une matière appropriée choisie avantageusement parmi les suivantes : verre, carbone, aramide, polyamide, polyester haute ténacité.

Au sens de l'invention, il est indifférent de considérer la fabrication préalable de l'armature **3** selon un procédé faisant intervenir l'établissement de fils de renfort à titre de fils de chaîne tendus entre une section d'entrée et une section de sortie et sur lesquels sont déposés, par exemple par un chariot trameur, les fils de renfort constitutifs de la nappe de trame **6.** Dans un tel cas, l'association des nappes **4** et **6** se superposant est assurée par passage dans une presse chauffante ou une calandre également chauffante de manière à réaliser une montée en température des fils de liage pour établir une liaison intime au droit des points de croisement entre les fils **5** et **7**.

Il peut aussi être mis en oeuvre une technique différente consistant à réaliser par exemple en continu, d'une part, l'amalgame **2** et, d'autre part, l'armature **3** en déposant successivement, sur cet amalgame, les fils **5,** puis les fils **7,** avant de faire passer l'ensemble dans un poste de montée en température et de compression relative.

Dans un tel exemple de réalisation, il peut alors être mis à profit la présence des fils de matière thermoplastique constitutifs de l'amalgame **2** pour établir un liage entre les fils de renfort **5** et **7** de l'armature **3,** d'une part, et entre cette dernière et la face **2a,** d'autre part.

Pour illustrer l'objet de l'invention dans la réalisation de l'armature **3,** différents exemples sont donnés ci-après.

### EXEMPLES

### EXEMPLE 1 :

- Nature des fils de renfort verre
- Nature des fils de liage verre enduit co-PA
- Ouverture des mailles (espacement des fils) 4 mm x 4 mm

### EXEMPLE 2 :

- Nature des fils de renfort verre
- Nature des fils de liage verre enduit co-PA
- Ouverture des mailles 10 mm x 8 mm

### EXEMPLE 4 :

- Nature des fils de renfort verre
- Nature des fils de liage verre / PP comélé
- Ouverture des mailles 10 mm x 10 mm.

### EXEMPLE 5 :

- Nature des fils de renfort verre / aramide / carbone
- Nature des fils de liage verre / polypropylène comêlés
- Ouverture des mailles 5 mm x 8 mm.

### EXEMPLE 6 :

- Nature des fils de renfort aramide
- Nature des fils de liage verre enduit PA
- Ouverture des mailles 10 mm x 20 mm.

Le complexe en forme de plaque réalisé comme il vient d'être dit présente l'avantage de pouvoir être obtenu à un prix de revient d'autant plus intéressant qu'une proportion importante de fibres de verre dans l'amalgame **2** et/ou dans l'armature **3** est issue de verre de récupération.

Le complexe présente une nature cohérente en ce sens qu'il bénéficie d'une tenue propre dans les trois dimensions, en raison des liaisons établies par fusion entre les fils thermoplastiques entre eux et avec les fils de renfort au sein de l'amalgame, entre les fils des nappes **4** et **6** de l'armature **3** et entre l'amalgame **2** et l'armature **3.** Un tel complexe présente, en outre, des caractéristiques mécaniques remarquables qui sont conférées par les fils de renfort.

Un tel complexe est, par ailleurs, stable hygrométriquement, compte tenu de ses éléments constitutifs, ce qui permet d'envisager sa mise en oeuvre dans un grand nombre d'applications, étant assuré que l'élément de structure construit en tout ou partie à partir du complexe offrira un état stable dans le temps pour des variations normales de température, considérées par référence à l'ambiante, et quelles que soient les variations de degré hygrométrique du milieu environnant et conservera en conséquence dans le temps ses propriétés mécaniques.

Le complexe ainsi obtenu se caractérise également par un avantage supplémentaire qui est celui de la capacité à fournir une isolation thermique et acoustique principalement due à la constitution fibreuse de l'amalgame **2** et à son degré de compactage.

Un autre avantage, devant être porté au compte de la réalisation du complexe, est celui de thermo-formabilité de la plaque obtenue, étant donné qu'il suffit de monter en température le complexe pour ramollir les fibres de matière thermoplastique et rendre possible une mise en forme par tous moyens appropriés. Cette faculté de déformation provient de la constitution de l'amalgame, mais aussi de la structure de l'armature **3** dont les fils de renfort **5** et **7** non entrelacés possèdent, après montée en température, une faculté de glissement relatif favorable à une mise en forme, notamment par moulage.

Un avantage supplémentaire est celui de la bonne résistance mécanique offerte intrinsèquement par l'âme **1,** en raison de sa structure, mais aussi par la présence de l'armature **3** qui permet de disposer, pour l'amalgame **2,** d'une face renforcée tendue.

Il doit être considéré, au sens de l'invention, que le complexe pourrait être réalisé de manière que les deux grandes faces de l'âme **1** soient associées à deux armatures, telles que **3.** Cette possibilité est illustrée par la **fig. 2** mettant en évidence l'existence de l'armature **3** et la présence d'une éventuelle armature **3**_{**1**} sur la face opposée **2b** de l'amalgame **2.**

Il n'est pas à exclure non plus l'incorporation d'une âme **3** dans l'épaisseur de l'amalgame **2** selon les applications visées pour constituer une âme **1** renforcée à coeur.

La **fig. 2** met aussi en évidence que la réalisation du complexe peut faire intervenir la présence de l'armature **3,** de telle sorte qu'elle soit juste posée en applique sur la face **2a,** alors que la **fig. 3** fait clairement apparaître que le mode de fabrication peut faire intervenir, après application de l'armature **3** sur la face **2a,** une mise en compression relative, de manière que l'armature **3** dans son intégralité soit imprimée dans la face **2a.**

La caractéristique de constitution de l'âme **1,** par au moins un amalgame **2** constitué de fibres liées mais non totalement compactées, permet d'envisager de réaliser le complexe pour lui faire comporter des formes spécifiques, telles que des empreintes négatives **10,** illustrées par la **fig. 4.** Une telle conformation locale peut être obtenue initialement, soit lors de la constitution ou fabrication du complexe, soit éventuellement par reprise ultérieure à partir d'un complexe présentant une épaisseur constante.

La **fig. 5** montre une même variante dans laquelle la conformation, appliquée au complexe, intéresse toute l'épaisseur, de manière à délimiter, à partir d'une des faces, telle que **2b,** une empreinte négative **10** et, simultanément, à partir de la face **2a,** une empreinte conjuguée positive **11.**

Cette faculté de conformation permet d'utiliser le complexe à titre de structure d'espacement entre, par exemple, deux parements **12** et **13** illustrés en traits mixtes et qui peuvent être de toutes natures appropriées.

En fonction du degré de compactage de l'amalgame **2,** il devient possible de produire un complexe seul ou des structures d'espacement qui offrent des caractéristiques résistance-isolation phonique qui peuvent être adaptées à chaque application spécifique.

Le complexe selon l'invention se prête bien également à l'application de revêtement décoratif, par exemple sous forme de support en feuille déformable appliquée et collée ou autrement liée en relation avec la face **2a** ou **2b,** qui offrent un appui de planéité remarquable.

Parmi les nombreuses applications possibles, il convient de citer l'utilisation avantageuse du complexe pour la réalisation de peaux de structures à âme alvéolée, telles que les nids d'abeilles en carton ou matière plastique, voire en bois, ou, encore, à âme à base de mousse de matière thermoplastique.

L'invention n'est pas limitée aux exemples décrits et représentés car diverses modifications peuvent y être apportées sans sortir de son cadre.

## Revendications

1. Complexe en forme générale de plaque utilisable pour la constitution de structures, moulées ou non, devant présenter un caractère de renfort associé à une isolation thermique et phonique, **caractérisé en ce qu'**il se compose :
• d'une âme **(1)** à caractère cohérent constitué d'un amalgame **(2)** de fibres de renfort et de fibres thermoplastiques liées au moins pour partie,
• et d'au moins une armature de renforcement **(3)** du type grille appliquée sur et intimement liée à l'une des grandes faces de l'âme, cette armature de type grille étant constituée au moins par une première nappe **(4)** de fils de renfort tendus **(5),** parallèles entre eux, et une seconde nappe **(6)** de fils de renfort **(7)** parallèles entre eux, s'étendant transversalement aux fils de la première nappe en étant croisés sans entrelacement, lesdits fils étant liés, au moins localement, par fusion de fils de liage en matière thermoplastique,
les fibres de renfort et les fils de renfort étant en une matière choisie parmi les suivantes : verre, carbone, aramide.

2. Complexe selon la revendication 1, **caractérisé en ce que** les fils de liage appartiennent à l'amalgame.

3. Complexe selon la revendication 1, **caractérisé en ce que**, au moins pour partie, les fils de liage sont associés aux fils de renfort.

4. Complexe selon l'une des revendications 1 à 3, **caractérisé en ce que** les fils de liage sont en une matière thermoplastique choisie parmi les suivantes : polypropylène, polyéthylène, polyamide, polyester.

5. Complexe selon l'une des revendications 1 à 4, **caractérisé en ce que** les fils de renfort de la grille sont à base de verre de récupération.

6. Complexe selon l'une des revendications 1 à 5, **caractérisé en ce que** l'amalgame est constitué par des fibres présentant une longueur élémentaire inférieure à 10 cm.

7. Complexe selon l'une des revendication 1 à 6, **caractérisé en ce que** l'amalgame est constitué de fibres ayant été soumises à compression.

8. Complexe selon l'une des revendications 1 à 7, **caractérisé en ce que** l'amalgame présente une épaisseur constante.

9. Complexe selon l'une des revendications 1 à 8, **caractérisé en ce que** l'amalgame présente des conformations locales.

10. Complexe selon l'une des revendications 1 à 9, **caractérisé en ce que** l'amalgame est composé de fibres thermoplastiques, à raison de 15 à 60 % en poids du poids total fibres plastiques-fibres de renfort.

11. Complexe selon l'une des revendications 1 à 10, **caractérisé en ce que** l'amalgame est composé, pour partie, de fibres de renfort et de fibres thermoplastiques à base de matière de récupération.

12. Complexe selon l'une des revendications 1 à 11, **caractérisé en ce que** l'amalgame est associé à une armature de renforcement de type grille, interne, disposée dans son épaisseur.

13. Complexe selon l'une des revendications 1 à 12, **caractérisé en ce que** l'âme est associée, sur l'une de ses grandes faces au moins, à un revêtement décoratif à caractère déformable ou non.

14. Complexe selon l'une des revendications précédentes, **caractérisé en ce que** l'âme constitue une structure d'espacement.

15. Complexe selon la revendication 14, **caractérisé en ce que** l'âme est associée à au moins un parement.

## Claims

1. A complex in the general form of a plate that may be used to create molded or non-molded structures, having a reinforcing character, associated with thermal or acousting insulation, **characterized in that** it is composed:
• of a core (1) with a cohesive character composed of an amalgam (2) of reinforcing fibers and thermoplastic fibers at least partially bonded,
• and at least one reinforcing frame (3) of the type of a grid applied on and intimately joined to one of the large faces of the core, said frame of the grid type being composed of at least one first lap (4) of tense reinforcing threads (5) parallel to each other and a second lap (6) of reinforcing threads (7) parallel to each other extending transversely to the threads of the first lap and crossing them without interlacing, said threads being bonded at least locally by the fusion of the binding threads to the thermoplastic material,
the reinforcing fibers and the reinforcing threads being of a material chosen from among the following: glass, carbon, aramide.

2. A complex as in Claim 1, **characterized in that** the binding threads belong to the amalgam.

3. A complex as in Claim 1, **characterized in that** the binding threads are at least partially associated with the reinforcing threads.

4. A complex as in one of Claims 1-3, **characterized in that** the binding threads are made of a thermoplastic material chosen from among the following: polypropylene, polyethylene, polyamide, polyester.

5. A complex as in one of Claims 1-4, **characterized in that** the reinforcing threads of the grid are based on recycled glass.

6. A complex as in one of Claims 1-5, **characterized in that** the amalgam is composed of fibers having a unit length less than 10 cm.

7. A complex as in one of Claims 1-6, **characterized in that** the amalgam is composed of fibers that have been subjected to compression.

8. A complex as in one of Claims 1-7, **characterized in that** the amalgam displays a constant thickness.

9. A complex as in one of Claims 1-8, **characterized in that** the amalgam displays local shape accommodations.

10. A complex as in one of Claims 1-9, **characterized in that** the amalgam is composed of thermoplastic fibers in a quantity of 15 to 60% by weight of the total weight of the plastic fibers - reinforcing fibers.

11. A complex as in one of Claims 1-10, **characterized in that** the amalgam is composed, in part, of reinforcing fibers and thermoplastic fibers based on recycled material.

12. A complex as in one of Claims 1-11, **characterized in that** the amalgam is associated with a reinforcing frame of the type of an internal grid arranged in its thickness.

13. A complex as in one of Claims 1-12, **characterized in that** the core is associated at least on one of its large faces with a decorative lining whether of deformable character or not.

14. A complex as in one of the preceding Claims, **characterized in that** the core is a spread-out structure.

15. A complex as in claim 14, **characterized in that** the core is associated with at least one facing.

## Patentansprüche

1. Im allgemeinen wie eine Platte geformter Komplex, verwendbar für den Aufbau von Strukturen, die geformt sind oder nicht, der einen Verstärkungscharakter in Verbindung mit einer thermischen und Schallisolierung aufweisen muss, **dadurch gekennzeichnet, dass** er sich zusammensetzt:
- aus einem kohärenten Kern (1), der aus einem Gemisch (2) von Verstärkungsfaser und von thermoplastischen Fasern besteht, die zumindest teilweise verbunden sind,
- und aus mindestens einer netzartigen Verstärkungsarmierung (3), die auf einer der großen Flächen des Kerns befestigt ist und eng damit verbunden, wobei diese netzartige Armierung mindestens von einer ersten Lage (4) gespannter Verstärkungsfäden (5) gebildet wird, die untereinander parallel sind, und einer zweiten Lage (6) von Verstärkungsfäden (7), die untereinander parallel sind und sich quer zu den Fäden der ersten Lage erstrecken, indem sie sich kreuzen, ohne sich zu verflechten, wobei die besagten Fäden zumindest lokal durch Verschmelzen der Bindungsfäden aus thermoplastischem Material verbunden sind,
wobei die Verstärkungsfasern und die Verstärkungsfäden aus einem der folgenden Materialien Glas, Karbon, Aramid ausgewählt sind.

2. Komplex nach Anspruch 1, **dadurch gekennzeichnet, dass** die Bindungsfäden zum Gemisch gehören.

3. Komplex nach Anspruch 1, **dadurch gekennzeichnet**, das die Bindungsfäden zumindest teilweise mit den Verstärkungsfäden verbunden sind.

4. Komplex nach einem der Ansprüche 1 bis 3, **dadurch gekennzeichnet, dass** die Bindungsfäden aus einem der folgenden thermoplastischen Materialien Polypropylen, Polyethylen, Polyamid, Polyester ausgewählt sind.

5. Komplex nach einem der Ansprüche 1 bis 4, **dadurch gekennzeichnet, dass** die Basis der Verstärkungsfäden des Netzes Altglas ist.

6. Komplex nach einem der Ansprüche 1 bis 5, **dadurch gekennzeichnet, dass** das Gemisch von Faser gebildet wird, die eine elementare Länge von unter 10 cm aufweisen.

7. Komplex nach einem der Ansprüche 1 bis 6, **dadurch gekennzeichnet, dass** das Gemisch Kern aus Fasern besteht, die komprimiert worden sind.

8. Komplex nach einem der Ansprüche 1 bis 7, **dadurch gekennzeichnet, dass** das Gemisch eine konstante Dicke aufweist.

9. Komplex nach einem der Ansprüche 1 bis 8, **dadurch gekennzeichnet, dass** das Gemisch lokale Ausformungen aufweist.

10. Komplex nach einem der Ansprüche 1 bis 9, **dadurch gekennzeichnet, dass** sich das Gemisch aus thermoplastischen Fasern in der Größenordnung von 15 bis 60 % Massenanteil des Gesamtgewichts Kunststofffasern - Verstärkungsfasern zusammensetzt.

11. Komplex nach einem der Ansprüche 1 bis 10, **dadurch gekennzeichnet, dass** sich das Gemisch teilweise aus Verstärkungsfasern und thermoplastischen Fasern auf der Basis von Recyclingmaterial zusammensetzt.

12. Komplex nach einem der Ansprüche 1 bis 11, **dadurch gekennzeichnet, dass** das Gemisch mit einer Verstärkungsarmierung in der Art eines in seinem Korpus angeordneten internen Netzes verbunden ist.

13. Komplex nach einem der Ansprüche 1 bis 12, **dadurch gekennzeichnet, dass** der Kern mindestens auf einer seiner großen Flächen mit einem dekorativen Überzug verbunden ist, der deformierbar ist oder nicht.

14. Komplex nach einem der vorhergehenden Ansprüche, **dadurch gekennzeichnet, dass** der Kern eine Abstandsstruktur bildet.

15. Komplex nach Anspruch 14, **dadurch gekennzeichnet, dass** der Kern mindestens mit einer Verblendung verbunden ist.
